# EUROPEAN PATENT SPECIFICATION

(11) **EP 0 341 078 B1**
(45) Date of publication and mention of the grant of the patent: **06.07.1994**
(21) Application number: 89304558.3
(22) Date of filing: 02.05.1989
(51) Int. Cl.: B62D 1/18

(54) **A steering column construction**
Lenksäulenanordnung
Construction de colonne de direction

(30) Priority: 30.04.1988 GB 8810344
(43) Date of publication of application: 08.11.1989
(73) Proprietor: FORD MOTOR COMPANY LIMITED, Brentwood, Essex CM13 3BW (GB); FORD FRANCE S. A., 92506 Rueil-Malmaison Cédex (FR); FORD-WERKE AKTIENGESELLSCHAFT, 50725 Köln (DE); FORD MOTOR COMPANY, Dearborn, MI 48120 (US)
(72) Inventor: Baskett, William Carl, Maldon Essex CM9 8DE (GB)
(74) Representative: Messulam, Alec Moses

(56) References cited:
- EP-A- 0 050 999
- FR-A- 2 360 454
- GB-A- 2 113 164
- GB-A- 2 113 629

## Description

This invention relates to a steering column construction for use in a motor vehicle, such as defined in the preamble of claim 1 and known for example from FR-A-2 360454.

It is important with steering columns in motor vehicles that the column be rigidly mounted in the vehicle to avoid any possibility of vibration or resonance occurring in the column. This can be done by making the column components relatively massive, but this is undesirable for a number of reasons. It is also necessary that the column be adapted for simple assembly into the vehicle on an assembly line.

A steering column construction is known from EP-A-0 050 999 in which a beam structure extends between the two column mounting points. In this construction, however, the position of the beam is fixed and the column moves relative to the beam when the column position is adjusted.

A steering column construction is also known from FR-A-2 360 454. This construction has a fixed support mounted on the vehicle and an adjustable support to which the steering column is permanently fixed. The adjustable support serves to connect the column to the fixed support, but since the adjustable support is freely mounted at one end to the fixed support, none of the mechanical loads imposed on the steering column will be transferred to the adjustable support or to the fixed support.

According to the present invention, there is provided an adjustable steering column construction in a vehicle body structure which has a bracket defining two fixed longitudinally spaced steering column mounting points, the construction comprising a steering shaft rotatably mounted in a tubular casing, a support member, means for connecting the support member to the bracket at the two mounting points so that the support member extends between the two mounting points, and means for securing the steering shaft casing to the support member and to the bracket, so that the casing extends alongside the support member, the securing means being adapted to allow the shaft, the casing and the support member to be adjusted relative to the mounting points with the shaft, casing and support member maintaining a substantially constant relative orientation, **characterised in that** the support member is in the form of a beam, and in that a clamp is provided at the lower end of the beam for clamping the outer race of a steering shaft bearing to the beam, which bearing is itself axially fixed on the steering shaft.

In this way, a substantial proportion of the loads which would otherwise be carried by the steering shaft and casing can be transferred to the beam and the steering shaft can then be designed purely to optimise the other requirements placed upon it.

The steering column is adjustable and allows height and reach adjustments for the steering wheel. One mounting point forms a horizontal pivot point and the other mounting point allows relative up and down movement through the use of a slotted hole on one component cooperating with a bolt passed through both components.

Furthermore, the beam may provide a track along which the steering shaft casing can slide towards and away from the driver's position to adjust the steering wheel reach.

In a preferred embodiment, only a single fastener needs to be released to enable both height and reach to be adjusted.

For convenience of description, the end of the beam furthest from the driver's position will be termed the lower end and the end nearest to the driver's position will be termed the upper end.

Preferably the pivot axis of the beam on the bracket is positioned below the clamp and registers with a universal joint in the steering column.

The upper mounting of the column casing on the beam and of the beam on the bracket may be accomplished by a fastener with a head which slides in an internal, longitudinal track on the casing, and passing through a clearance hole in the beam and through a generally vertical slot on the bracket. Tightening of this fastener clamps all three components together.

When the fastener is loosened then the steering shaft casing can be moved axially relative to the beam. In this connection, the steering shaft itself may have an upper section and a lower section which fit together telescopically and allow rotation to be transmitted from one section to the other. Additionally, when the fastening is loosened the beam can be moved up and down to the extent allowed by the dimensions of the slot in the bracket, about the axis formed by the pivot at its lower end.

The invention will now be further described, by way of example, with reference to the accompanying drawings, in which:
Figure 1 is a schematic, exploded perspective view of a steering column construction in accordance with the invention;
Figure 2 is a perspective view taken in the opposite direction from Figure 1 showing the column assembled;
Figure 3 shows a cross section through one column fastening point;
Figure 4 is an exploded view of a column fastening point shown in Figure 3; and
Figure 5 shows an alternative form of bracket for use in a construction in accordance with the invention.

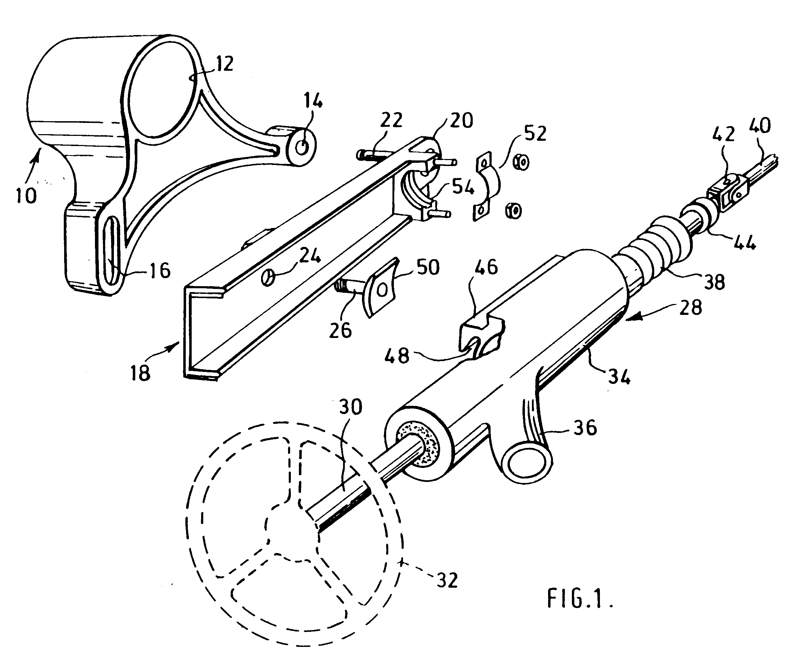

Figure 1 shows a bracket 10 which is to be secured to the bodywork of a vehicle. In this case, the bracket 10 has a sleeve part 12 which is to be fitted over and secured to a tubular cross member in the vehicle. However, this is not the only type of vehicle fitting that could be used and Figure 5 shows an alternative bracket 10a with a flange 12a and two apertures for fixing bolts.

The brackets 10,10a both have one cylindrical bore 14 and one slotted aperture 16. As an alternative to a separate bracket, two spaced mounting points could be formed directly as parts of the vehicle body structure.

A beam 18 has a lower end 20 in which is secured a fastening pin 22 intended to pass through the bore 14 and to be secured therein so that the beam can pivot about the axis of the pin 22. The amount of such pivoting movement which is possible will be determined by means of a second pin or fastener 26 passing through a clearance hole 24 in the beam and then through the aperture 16. The pivoting movement will be limited by the fastening pin 26 contacting the top or bottom of the aperture 16.

The steering column itself is shown at 28. It comprises a steering shaft 30 (a steering wheel is shown at 32 in dotted lines at the top of the shaft) and a steering shaft casing 34. The casing 34 has a housing 36 for a conventional steering lock. Below the casing 34 is an energy absorption feature in the form of a convoluted can 38, and a lower steering link 40 connected to the shaft 30 by a universal joint 42. A bearing 44 is axially fixed on the lower end of the shaft 30.

On the side of the casing 34 adjacent the beam 18 there is a shaped part 46 which will fit within the cross section of the beam 18 and can slide along the beam.

Within the shaped part 46 is an internal groove 48 which slidably receives the head 50 of the fastener 26.

A clamp 52 cooperates with a saddle 54 on the beam 18 to clamp the outer race of the bearing 44 to the beam. The relative positions of the bearing 44 and the universal joint 42 correspond to those of the saddle 54 and the pin 22 so that when the bearing is clamped in position, the axis of the joint 42 corresponds to the axis of the pin 22.

In use, the pin fastener 50, 26 is positioned in the slot 48 and then the shaped part 46 is laid in the track of the beam 18. The clamp 52 is fastened around the bearing 44. This is the state at which the steering column is prepared before being mounted in a vehicle on an assembly line. On the assembly line the pins 22, 26 are inserted through the apertures 14, 16 and nuts are tightened on their free ends. The nut on the pin 22 will be tightened such that it continues to allow pivoting movement about the axis of the pin, and the tightening of the nut on the pin 26 will be under the control of the driver, in a manner which is to be described. If the tension in the pin 26 is slackened, then
(a) the casing 34 can slide up and down the beam 18, (the reach adjustment) and
(b) the beam can be rotated up and down over the distance dictated by the available movement of the pin 26 in the aperture (the height adjustment).

It is to be noted that while altering the height of the column, when the beam pivots about the axis 22, the column pivots about the axis of the universal joint 42 because of the coincidence of these two axes.

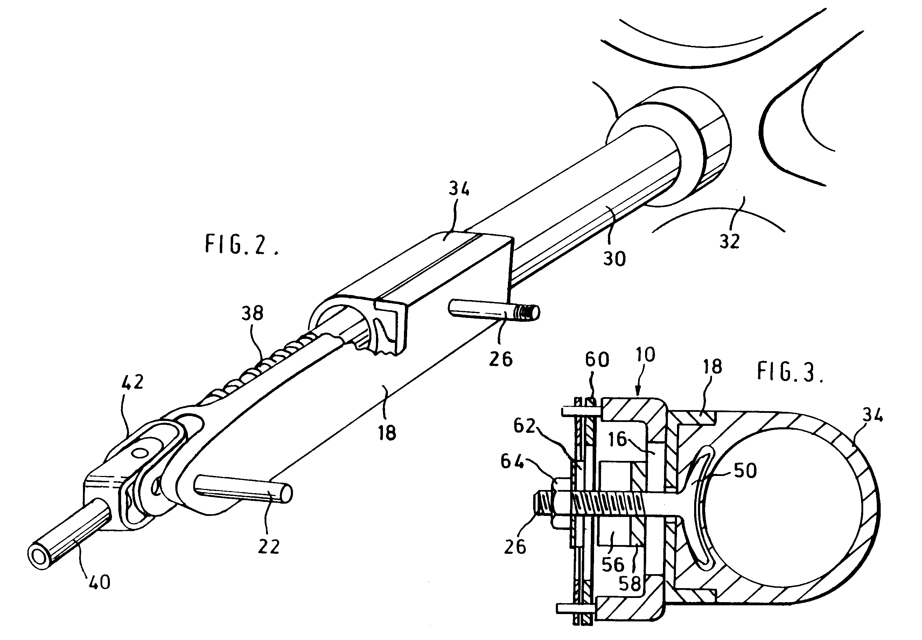

Figure 2 shows the assembled column ready for mounting in a vehicle (and in the absence of any bracket 10 which will be premounted in the vehicle).

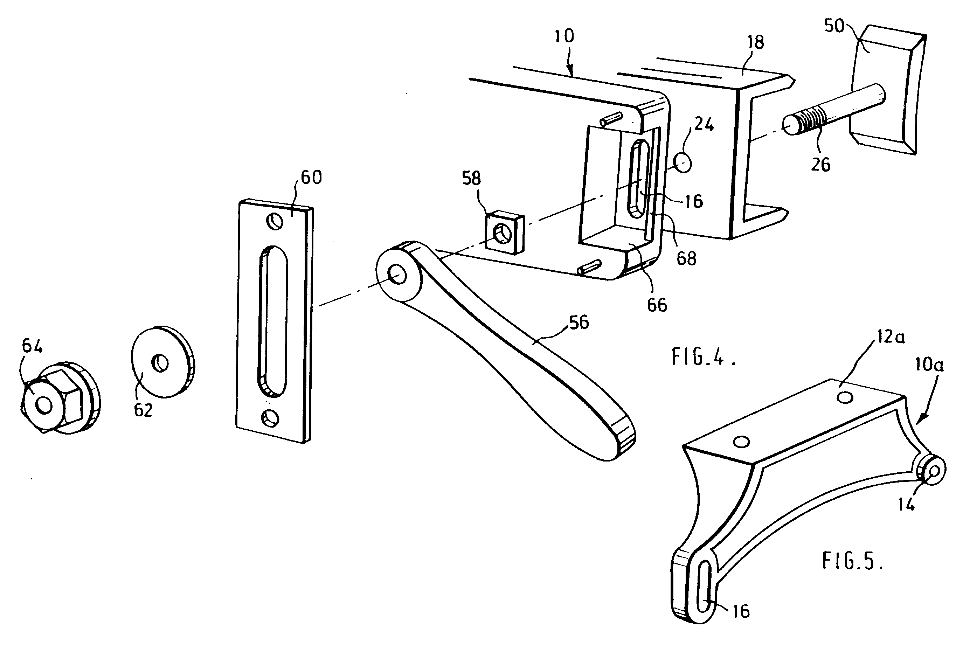

Figures 3 and 4 show how the pin 26 is tightened. To enable the driver to tighten or slacken the tension in the pin 26, a lever 56 is used. The lever 56 is trapped between a spacer 58 and a closure plate 60 which in turn is held in place by a washer 62 and a lock nut 64 threaded onto the end of the pin 26.

The end of the bracket 10 where the aperture 16 is arranged has a recess 66 with a recess wall 68 in the form of a linear cam. The upper end of the wall 68 is of less height than the lower end of the wall. When the components shown in Figure 4 are all assembled and the nut 64 is tightened, then up and down movement of the lever 56 will alter the tension in the pin 26. This is because the lever 56 rides on the linear cam wall 68 and in the upper most position of the lever the pin is loose and in the lowermost position the pin is tight.

The steering column construction thus described allows the incorporation of a stiffening beam into the unit so that the stiffening beam can take over many of the functions previously performed by the column itself. In particular the use of the beam in this way can serve to avoid undesirable resonance being produced in the column. Furthermore the manner in which the column unit can be assembled into the vehicle is considerably simplified compared with prior art constructions.

## Claims

1. An adjustable steering column construction in a vehicle body structure which has a bracket (10) defining two fixed longitudinally spaced steering column mounting points, the construction comprising a steering shaft (30) rotatably mounted in a tubular casing (34), a support member (18), means (22,26) for securing the support member (18) to the bracket (10) at the two mounting points so that the support member (18) extends between the two mounting points, and means (46,48,50) for securing the steering shaft casing (34) to the support member (18) and to the bracket (10), so that the casing (34) extends alongside the support member (18), the securing means (46,48,50) being adapted to allow the shaft (30), the casing (34) and the support member (18) to be adjusted relative to the mounting points with the shaft (30), casing (34) and support member (18) maintaining a substantially constant relative orientation, **characterised in that** the support member is in the form of a beam, and in that a clamp (52,54) is provided at the lower end of the beam (18) for clamping the outer race of a bearing (44) to the beam, which bearing is itself axially fixed to the steering shaft.

2. A steering column construction as claimed in Claim 1, wherein one mounting point (14) forms a horizontal pivot point and the other mounting point (16) allows relative up and down movement between two components, one on the bracket (10) and one on the column construction, through the use of a slotted hole (16) on one component cooperating with a bolt (26) passed through both components.

3. A steering column construction as claimed in Claim 1 or Claim 2, wherein the beam (18) provides a track along which the steering shaft casing (34) can slide towards and away from the driver's position to adjust the steering wheel reach.

4. A steering column construction as claimed in Claim 3, wherein only a single fastener (26) needs to be released to enable both height and reach to be adjusted.

5. A steering column construction as claimed in any preceding claim, wherein the pivot axis (22) of the beam (18) on the bracket (10) is positioned below the clamp (52,54) and registers with a universal joint (42) in the steering column (30).

6. A steering column construction as claimed in any one of Claims 2 to 5, wherein the upper mounting of the column casing (34) on the beam (18) and of the beam (18) on the bracket (10) is accomplished by a fastener (26) with a head (50) which slides in an internal, longitudinal track (48) on the casing (34), passes through a clearance hole (24) in the beam (18) and through a generally vertical slot (16) on the bracket (10).

7. A steering column construction as claimed in any preceding claim, wherein the steering shaft (30) is formed of an upper section and a lower section which fit together telescopically and allow rotation to be transmitted from one section to the other.

## Patentansprüche

1. Verstellbare Lenksäulenkonstruktion in einer Kraftfahrzeugkarosseriestruktur, die über eine Halterung (10) verfügt, die zwei feste, längsseitig mit Abstand voneinander angeordnete Lenksäulen-Einbaupunkte bestimmt, welche Konstruktion eine drehbar in einem röhrenförmigen Gehäuse (34) eingebaute Lenkwelle (30), ein Trägerteil (18), Mittel (22,26) zur Befestigung des Trägerteils (18) an der Halterung (10) an den beiden Einbaupunkten, so daß das Trägerteil (18) sich zwischen den beiden Einbauteilen erstreckt, und Mittel (46,48,50) zur Befestigung des Lenkwellengehäuses (34) an das Trägerteil (18) und an die Halterung (10), so daß das Gehäuse (34) sich entlang des Trägerteils (18) erstreckt, umfaßt, wobei die Befestigungsmittel (46,48,50) so eingestellt sind, daß sie eine Verstellung der Welle (30), des Gehäuses (34) und des Trägerteils (18) in Bezug zu den Einbaupunkten ermöglichen, wobei die Welle (30), das Gehäuse (34 und das Trägerteil (18) eine im wesentlichen konstante, relative Orientierung beibehalten, dadurch gekennzeichnet, daß das Trägerteil die Form eines Balkens hat, und daß eine Klammer (52,54) am unteren Ende des Balkens (18) vorhanden ist, um den äußeren Laufring eines Lagers (44) am Balken festzuklemmen, welches Lager selbst axial an der Lenkwelle befestigt ist.

2. Lenksäulenkonstruktion gemäß Anspruch 1, worin ein Einbaupunkt (14) einen horizontalen Drehpunkt bildet, und der andere Einbaupunkt (16) eine relative Aufwärts- und Abwärtsbewegung zwischen zwei Bestandteilen ermöglicht, von denen eins sich auf der Halterung (10), und das andere auf der Säulenkonstruktion befindet, indem ein Schlitzloch (16) in einen Bestandteil verwendet wird, das zusammenwirkt mit einer Schraube (26), die durch beide Bestandteile hindurchgeht.

3. Lenksäulenkonstruktion gemäß Anspruch 1 oder Anspruch 2, worin der Balken (18) über eine Spur verfügt, entlang der das Lenkwellengehäuse (34) zu der Position des Fahrers hin und von dieser weg gleiten kann, um so die Lenkradreichweite zu verstellen.

4. Lenksäulenkonstruktion gemäß Anspruch 3, worin nur ein einziges Verbindungselement (26) gelockert werden muß, um eine Verstellung von Höhe und Reichweite zu ermöglichen.

5. Lenksäulenkonstruktion gemäß einem der vorstehenden Ansprüche, worin die Drehachse (22) des Balkens (18) auf der Halterung (10) unterhalb der Klammer (52,54) positioniert wird, und mit einem Universalgelenk (42) in der Lenksäule (30) eingepasst wird.

6. Lenksäulenkonstruktion gemäß einem der Ansprüche 2 bis 5, worin der obere Einbau des Säulengehäuses (34) auf dem Balken (18) und des Balkens (18) auf der Halterung (10) mittels eines Verbindungselements (26) bewerkstelligt wird, das über ein Kopfteil (50) verfügt, das in einer inneren, länglichen Spur (48) auf dem Gehäuse (34) gleitet, durch ein durchgehendes Loch (24) im Balken (18) und durch eine im allgemeinen vertikale Schlitzöffnung (16) auf der Halterung (10) hindurchgeht.

7. Lenksäulenkonstruktion gemäß einem der vorstehenden Ansprüche, worin die Lenkwelle (30) aus einem oberen Abschnitt und einem unteren Abschnitt gebildet ist, die teleskopisch ineinandergreifen, und die Übertragung der Drehung von einem Abschnitt zu dem anderen ermöglichen.

## Revendications

1. Ensemble de colonne de direction réglable dans une structure de carrosserie de véhicule qui présente une bride de fixation (10) définissant deux points de montage de la colonne de direction fixes et espacés de manière longitudinale, l'ensemble comprenant un arbre de direction (30) monté de manière rotative dans un carter tubulaire (34), un élément de support (18), des moyens (22, 26) destinés à relier l'élément de support (18) à la bride de fixation (10) au niveau des deux points de montage, de sorte que l'élément de support (18) s'étend entre les deux points de montage, et des moyens (46, 48, 50) destinés à fixer le carter (34) de l'arbre de direction à l'élément de support (18) et à la bride de fixation (10), de sorte que le carter s'étend le long de l'élément de support (18), les moyens de fixation (46, 48, 50) étant destinés à permettre à l'arbre (30), au carter (34) et à l'élément de support (18) d'être réglés par rapport aux points de montage, l'arbre (30), le carter (34) et l'élément de support (18) conservant une orientation relative essentiellement constante, caractérisé en ce que l'élément de support a la forme d'une poutre, et en ce qu'une bride de serrage (52, 54) est fournie à l'extrémité inférieure de la poutre (18) afin de brider la bague extérieure d'un pallier (44) d'arbre de direction à la poutre, ledit support étant lui-même fixé de manière axiale sur l'arbre de direction.

2. Ensemble de colonne de direction selon la revendication 1, dans lequel un point de montage (14) forme un point de pivot horizontal et l'autre point de montage (16) permet des mouvements relatifs vers le haut et vers la bas entre deux composants, l'un sur la bride de fixation (10) et l'autre sur l'ensemble de colonne, au moyen d'un trou en fente (16) sur un composant coopérant avec un boulon (26) passé à travers les deux composants.

3. Ensemble de colonne de direction selon la revendication 1 ou 2, dans lequel la poutre (18) fournit une glissière le long de laquelle le carter (34) de l'arbre de direction peut coulisser vers la position du conducteur et en sens inverse de manière à régler l'extension du volant.

4. Ensemble de colonne de direction selon la revendication 3, dans lequel il n'est besoin de relâcher qu'un seul élément de fixation (26) pour permettre le réglage de la hauteur et de l'extension.

5. Ensemble de colonne de direction selon l'une des revendications précédentes, dans lequel l'axe de pivot (22) de la poutre (18) sur la bride de fixation (10) est placé sous la bride de serrage (52, 54) et coïncide exactement avec le joint de transmission (42) dans la colonne de direction (30).

6. Ensemble de colonne de direction selon l'une des revendications 2 à 5, dans lequel le montage supérieure du carter (34) de la colonne sur la poutre (18) et de la poutre (18) sur la bride de fixation (10) est effectué par un élément de fixation (26) dont la tête (50) coulisse dans une glissière (48) interne longitudinale sur le carter (34), passe à travers un trou de dégagement (24) dans la poutre (18) et à travers une fente généralement verticale (16) sur la bride de fixation (10).

7. Ensemble de colonne de direction selon l'une des revendications précédentes, dans lequel l'arbre de direction (30) est formé d'une section supérieure et d'une section inférieure qui s'emboîtent de manière téléscopique et permettent que la rotation soit transmise d'une section à l'autre.
